(19) Europäisches Patentamt
European Patent Office
Office européen des brevets

(11) Numéro de publication: **0 263 022 B1**

# (12) FASCICULE DE BREVET EUROPEEN

(45) Date de publication du fascicule du brevet: **07.11.90**

(51) Int. Cl.[5]: **C08F 20/36**, C07C 255/57, C09K 19/38

(21) Numéro de dépôt: **87402152.0**

(22) Date de dépôt: **28.09.87**

(54) **Polymères mesomorphes à chaines latérales dérivés du 1-(phényl)-2-(4-cyanophényl)éthane.**

(30) Priorité: **30.09.86 FR 8613573**

(43) Date de publication de la demande: **06.04.88 Bulletin 88/14**

(45) Mention de la délivrance du brevet: **07.11.90 Bulletin 90/45**

(84) Etats contractants désignés: **DE GB**

(56) Documents cités:
**EP-A- 0 167 912**
**EP-A- 0 188 785**
**DE-A- 2 722 589**
**FR-A- 2 181 943**
**GB-A- 2 002 767**

(73) Titulaire: **THOMSON-CSF, 51, Esplanade du Général de Gaulle, F-92800 Puteaux(FR)**

(72) Inventeur: **Dubois, Jean-Claude, c/o THOMSON-CSF, SCPI, 19, avenue de Messine, F-75008 Paris(FR)**
Inventeur: **Le Barny, Pierre, c/o THOMSON-CSF, SCPI, 19, avenue de Messine, F-75008 Paris(FR)**
Inventeur: **Leborgne, Alain, c/o THOMSON-CSF, SCPI, 19, avenue de Messine, F-75008 Paris(FR)**
Inventeur: **Spassky, Nicolas, c/o THOMSON-CSF, SCPI, 19, avenue de Messine, F-75008 Paris(FR)**
Inventeur: **Esselin, Sophie, c/o THOMSON-CSF, SCPI, 19, avenue de Messine, F-75008 Paris(FR)**
Inventeur: **Noel, Claudine, c/o THOMSON-CSF, SCPI, 19, avenue de Messine, F-75008 Paris(FR)**
Inventeur: **Lacoudre, Nicole, c/o THOMSON-CSF, SCPI, 19, avenue de Messine, F-75008 Paris(FR)**

(74) Mandataire: **Lepercque, Jean et al, THOMSON-CSF SCPI, F-92045 PARIS LA DEFENSE CEDEX 67(FR)**

EP 0 263 022 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne une famille d'homopolymères à chaînes latérales du type polyacrylate dérivés du 1-(phényl)-2-(4-cyanophényl) éthane et présentant une ou plusieurs mésophases.

Actuellement on envisage de plus en plus d'utiliser des matériaux polymères dans des dispositifs relevant du domaine de l'optique non linéaire ou du domaine de l'affichage (cf. EP-A 188 785). L'utilisation de ces polymères dans des dispositifs d'affichage est soumise à deux conditions : ils doivent posséder une anisotropie diélectrique élevée et également une mésophase nématique. Il existe cependant à titre expérimental des systèmes d'affichage utilisant un polymère smectique A. Les polymères possédant ces deux caractéristiques sont de plus en plus demandés. Un tel polymère possédant en plus une température de transition vitreuse supérieure à la température ambiante peut être avantageusement utilisé dans le domaine de l'optique non linéaire.

Afin de satisfaire à ces exigences, l'invention propose une famille d'homopolymères possédant à la fois une anisotropie diélectrique élevée due à la présence d'un groupement cyano donnant lieu à un moment dipolaire important, au moins une mésophase nématique et, pour certains membres de cette famille une température de transition vitreuse supérieure à la température ambiante.

L'invention a donc pour objet un polymère mésomorphe à chaînes latérales, caractérisé en ce qu'il répond à la formule chimique générale suivante :

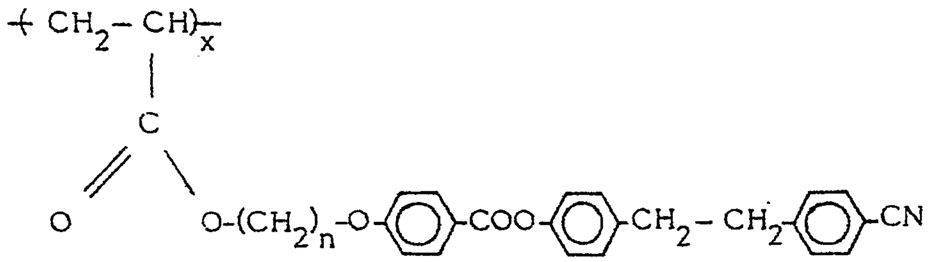

x indiquant le degré de polymérisation et 2≤αμρ¨n ≤αμρ¨15.

L'invention concerne également le procédé de fabrication des polymères de cette famille.

Les polymères obtenus répondent aux dénominations suivantes :
poly [1-(a-cryloyloxyéthyloybenzoyloxyphényl)-2-(4'-cyanophényl) éthane]
poly [1-(a-cryloyloxypropyloxybenzoyloxyphényl)-2-(4'-cyanophényl) éthane]
poly [1-(a-cryloyloxybutyloxybenzoyloxyphényl)-2-(4'-cyanophényl) éthane]
poly [1-(a-cryloyloxypentyloxybenzoyloxyphényl)-2-(4'-cyanophényl) éthane]
poly [1-(a-cryloyloxyhexyloxybenzoyloxyphényl)-2-(4'-cyanophényl) éthane]
poly [1-(a-cryloyloxyheptyloxybenzoyloxyphényl)-2-(4'-cyanophényl) éthane]
poly [1-(a-cryloyloxyoctyloxybenzoyloxyphényl)-2-(4'-cyanophényl) éthane]
poly [1-(a-cryloyloxynonyloxybenzoyloxyphényl)-2-(4'-cyanophényl) éthane]
poly [1-(a-cryloyloxydécyloxybenzoyloxyphényl)-2-(4'-cyanophényl) éthane]
poly [1-(a-cryloyloxyundécyloxybenzoyloxyphényl)-2-(4'-cyanophényl) éthane]
poly [1-(a-cryloyloxydodécyloxybenzoyloxyphényl)-2-(4'-cyanophényl) éthane]
poly [1-(a-cryloyloxytridécyloxybenzoyloxyphényl)-2-(4'-cyanophényl) éthane]
poly [1-(a-cryloyloxytétradécyloxybenzoyloxyphényl)-2-(4'-cyanophényl) éthane]
poly [1-(a-cryloyloxypentadécyloxybenzoyloxyphényl)-2-(4'-cyanophényl) éthane]

La description qui va suivre portera sur le procédé général de synthèse des polymères selon l'invention ainsi que sur leurs caractèrisations physiques.

PROCEDE GENERAL DE SYNTHESE.

Les polymères selon l'invention sont obtenus généralement en dix étapes à partir des produits commerciaux suivants : l'acide ω-bromoalcanoïque, l'acide 4-hydroxybenzoïque, l'acide acrylique, l'acide 4-bromophénylacétique et l'anisol.

Réaction 1 : Obtention du chlorure de 4-bromophénylacétyle. Ce chlorure d'acide est obtenu par action du chlorure de thionyle sur l'acide 4-bromophénylacétique.

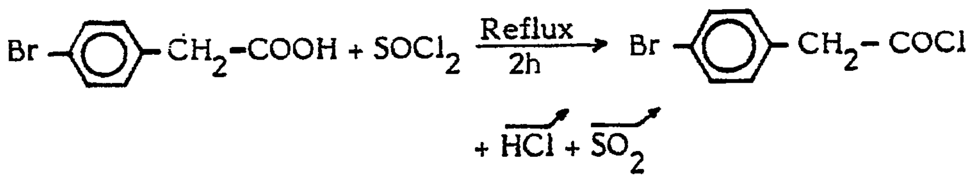


Réaction 2 : Synthèse du 4-(4-bromophénylacétyl) 4'-methoxyphényle.

Le 4-(4-bromophénylacétyl)-4'-méthoxyphényle est obtenu par action du chlorure de 4-bromophéne sur le méthoxybenzène en présence de chlorure d'aluminium et de chlorure de méthylène, à une température de 5° C. (Réaction de FRIEDELCRAFTS).

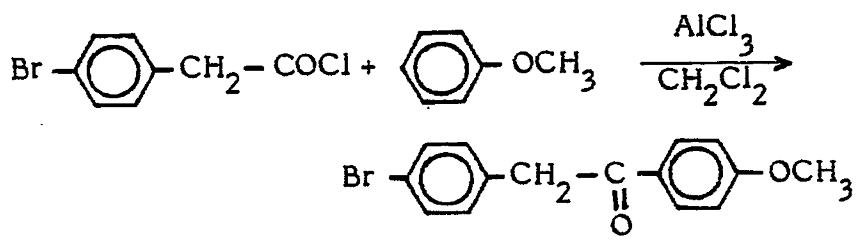


Le rendement de la réaction est de 75%. Le point de fusion du produit obtenu est de 139° C.

Réaction 3 : Obtention du 1-(4-bromophényl)-2-(4'hydroxyphényl) éthane. Le 4-(4-bromophénylacétyl)-4'-méthoxyphényle est réduit en 1-(4-bromophényl)-2-(4'hydroxyphényl) éthane selon la réation de WOLF-KISHNER modifiée par HUANG-MINLON, par action de l'hydrazine (en solution aqueuse à 85 % en poids) en milieu basique et en présence de diéthylène glycol. Le milieu basique est obtenu par de la potasse. Cette réaction s'accompagne d'une coupure totale de la fonction éther méthylique.

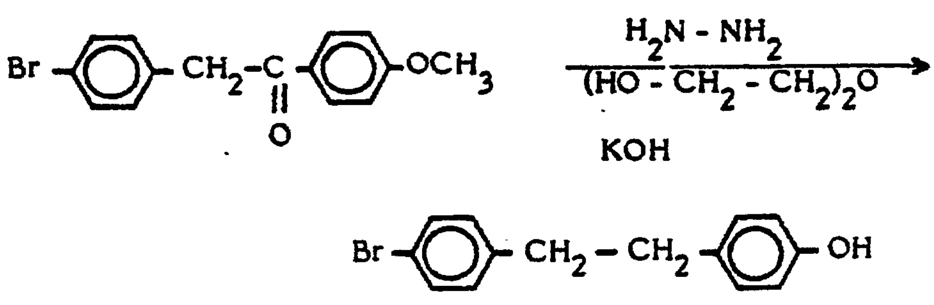


Le phénol est séparé du 1-(4-bromophényl)-2-(4'-methoxyphényl) éthane par dissolution à froid dans le méthanol. Le phénol est ensuite recristallisé dans le benzène.

Le rendement de la réaction est de 85 %. Le point de fusion du produit obtenu est de 125° C.

Réaction 4 : Synthèse du 1-(4 cyanophényl) 2-(4'hydroxyphényl) éthane.

Le 1-(4-cyanophényl)-2-(4'hydroxyphényl) éthane est obtenu par cyanuration du 1-(4-bromophényl)-2-(4'-hydroxyphényl) éthane au moyen du cyanure cuivreux en utilisant la N-méthylpyrrolidone comme solvant.

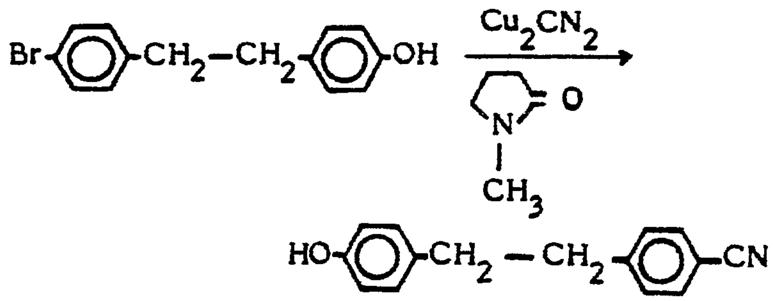


Le rendement de la réaction est de 84 %. Le point de fusion du produit obtenu est de 152° C.

Réaction 5 : Obtention de 1' ω-bromoalcanol.

Cet alcool est obtenu par réduction de l'acide ω-bromoalcanoïque correspondant au moyen de l'hydrure de lithium et d'aluminium dans l'éther.

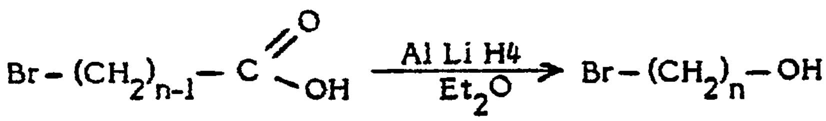


Dans le cas où n = 6, le point d'ébullition du liquide obtenu est de 101° C sous une pression de 4mm de mercure et le rendement de la réaction est de 70 %.
Les alcools correspondant à n = 2, 3 et 11 sont disponibles dans le commerce.

Réaction 6 : Synthèse de l'acide 4(ω-hydroxyalkyloxy) benzoïque.

Cet acide résulte de l'action de 1' ω-bromoalcanol obtenu à l'issue de la réaction 5 sur l'acide 4 hydroxybenzoïque en milieu potasse hydroalcoolique.

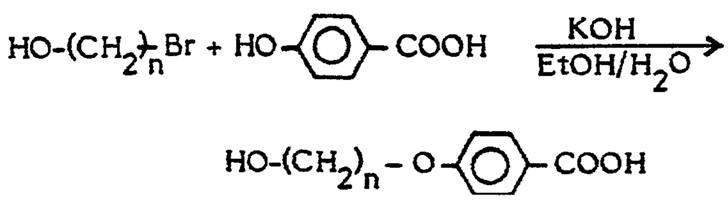


Pour n = 6, le rendement de la réaction est de 66,5 % et le comportement thermique est le suivant :
C 137,2 (N) 114,2 L
les températures étant exprimées en degrés Celsius, C désignant la phase cristalline, (N) une phase nématique monotrope et L la phase liquide.

Réaction 7 : Obtention de l'acide 4(acryloyloxyalkloxy) benzoïque

L'estérification de l'acide 4( ω-hydroxyalkloxy) benzoïque, obtenu à l'issue de la réaction 6, au moyen de l'acide acrylique conduit à l'acide 4-(acryloyloxyalkyloxy) benzoïque. Cette estérification se fait en utilisant le benzène comme solvant et l'acide paratoluène sulfonique (APTS) comme catalyseur. Au cours de la réaction, l'hydroquinone est utilisée comme inhibiteur de polymérisation.

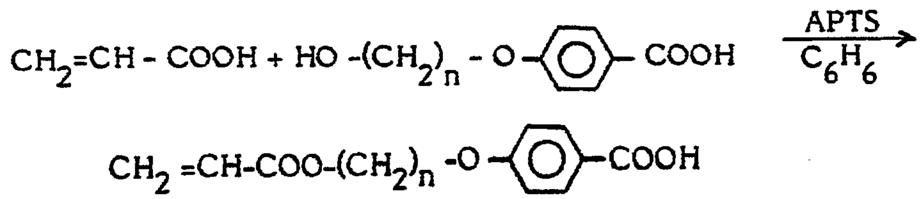


Pour n = 6, le rendement de la réaction est de 85 % et le diagramme de phases est le suivant :
C 83 $S_c$ 102 N 112 L
les températures étant toujours exprimées en degrés Celsius, S désignant une phase smectique C et N une phase nématique.

Réation 8 : Synthèse du chlorure de 4(acryloyloxyalkyloxy) benzoyle.

Le passage de l'acide obtenu à l'issue de la réaction 7 au chlorure d'acide se fait à froid au moyen du chlorure d'oxalyle en utilisant le diméthyl formamide (DMF) comme catalyseur.

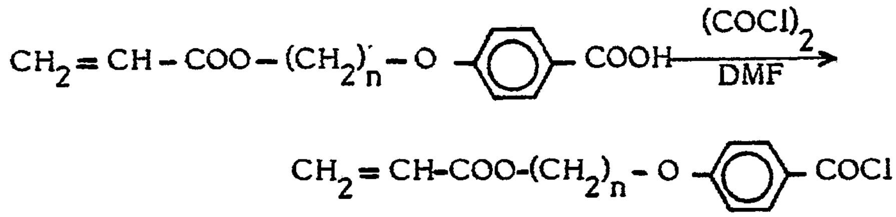


L'utilisation du chlorure d'oxalyle à la place du chlorure de thionyle pour préparer le chlorure d'acide désiré permet de préserver la fonction acrylate.

Réaction 9 : Synthèse du 1'-(4-acryloyloxyalkyloxybenzoyloxyphényl)-2-(4'-cyanophényl) éthane.

Cet ester est synthétisé par action du chlorure de 4-(acryloyloxyalkyloxy) benzoyle obtenu à l'issue de la réaction 8 sur le 1-(4-cyanophényl)-2-(4'-hydroxyphényl) éthane obtenu à l'issue de la réaction 4 dans le tétrahydrofuranne (THF) en présence de triéthylamine.

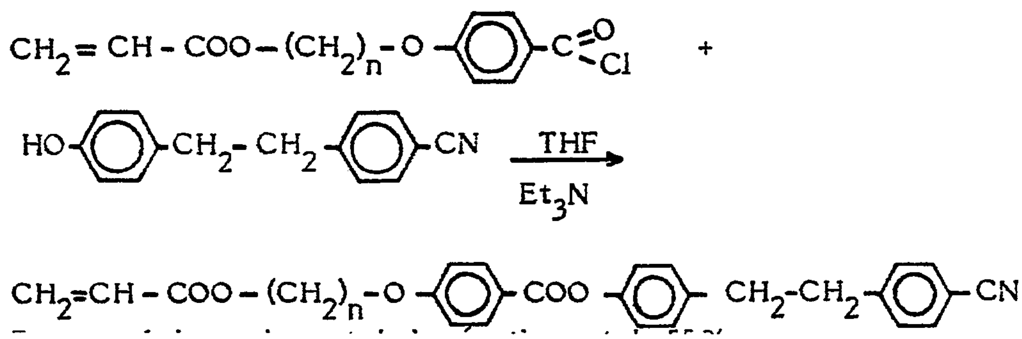


Pour n = 6, le rendement de la réaction est de 55 %.

Réaction 10 : Polymérisation des monomères.

La polymérisation peut être effectuée sous vide en utilisant 1'α,α'-azobisisobutyronitrile comme amorceur radicalaire et le chlorobenzène comme solvant.

A titre d'exemple, quelques conditions de polymérisation sont rassemblées dans le tableau 1 placé en fin de description. On a indiqué dans ce tableau, pour quelques valeurs de n, le rapport M/A (M étant le nombre de moles du monomère et A le nombre de moles d'amorceur radicalaire), la température T en degrés Celsius et le temps t en heures. Le tableau 1 mentionne également les masses moléculaires moyennes en poids Mp (en grammes) et l'indice de polydispersité I. Les masses moléculaires moyennes ont été

déterminées par GPC (chromatographie par perméation de gel) en utilisant le polystyrène comme standard. On a également indiqué dans ce tableau le rendement de l'opération de polymérisation.

Les réactions 7 et 8 sont décrites dans le brevet allemand DE-A 3 211 400 d'ETZBACH, RINGSDORF, PORTUGAL et SCHMIDT. Les autres réactions chimiques sont classiques.

Il faut noter que pour n = 4 la réaction 6 n'est pas possible. En effet, en milieu basique le 4-bromo-1-butanol se cyclise selon la réaction suivante :

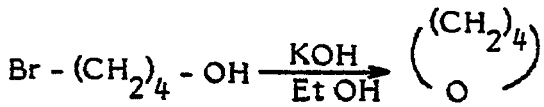


Pour obtenir l'acide 4-[4'-acryloyloxybutyloxy] benzoïque (c'est-à-dire le produit final correspondant à la réaction 7 dans le procédé général de synthèse), on doit adopter le schéma réactionnel suivant.

. protection de la fonction acide de l'acide 4-hydroxybenzoïque.

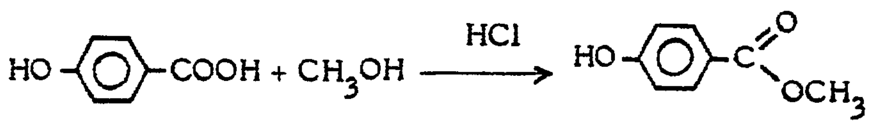


. éthérification au moyen du 1,4-dibromobutane

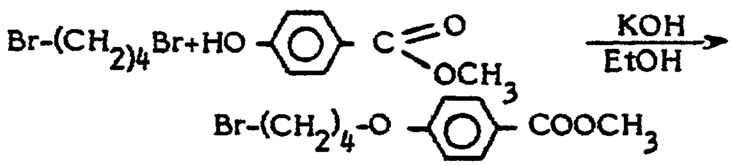


. déprotection de la fonction acide.

Cette réaction s'effectue d'abord en milieu potasse alcoolique pui en milieu acide.

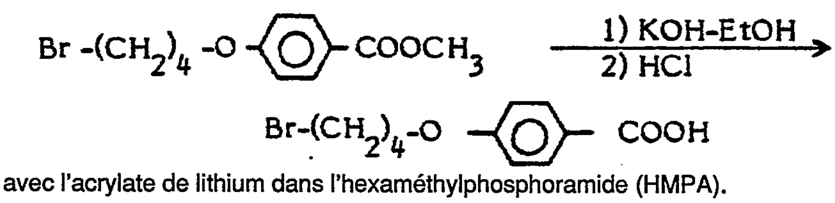


.estérification avec l'acrylate de lithium dans l'hexaméthylphosphoramide (HMPA).

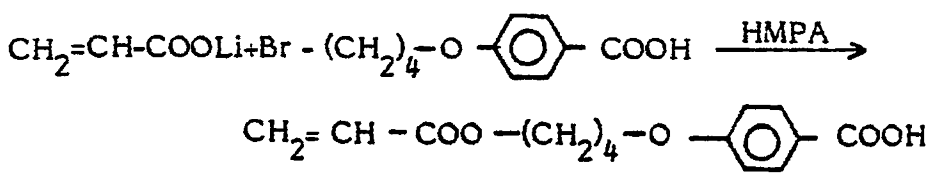


On voit donc que pour n = 4, les réactions 5 à 7 du procédé général de synthèse sont remplacées par les quatre réactions ci-dessus.

PROPRIETES PHYSIQUES DES POLYMERES.

Afin de préciser leurs propriétés mésomorphes, les polymères ont été étudiés par analyse enthalpique différentielle, microscope optique et diffraction des rayons X.

A titre d'exemple non limitatif, le tableau 2 placé en fin de description regroupe les résultats obtenus pour différentes valeurs de n. Dans ce tableau, les lettre G, N, $N_{re}$, S, $S_A$ et L désignent respectivement les phases vitreuse, nématique, nématique réentrante, smectique, smectique A et liquide. Les températures de transistion indiquées dans ce tableau sont exprimées en degrés Celsius.

Les polymères selon l'invention qui possèdent une phase néma tique (n= 2 ou 6 par exemple) et ayant une température de transition vitreuse supérieure à la température ambiante, étant amorphes et portant un dipole permanent (groupe cyano) dans leur chaîne latérale (ce qui permet un alignement sous champ électrique), ont une application possible en optique non linéaire et plus particulièrement en génération de seconde harmonique. Ils peuvent en effet servir de matrice d'orientation à des petites molécules ayant une forte hyperpolarisabilité du second ordre et conduire à des systèmes non centrosymétriques après orientation sous champ électrique.

TABLEAU 1

| n | Conditions de polymérisation | | | GPC | | Rendement (%) |
|---|---|---|---|---|---|---|
| | M/A | T | t | Mp | I | |
| 2 | 37 | 70 | 72 | 10 300 | 1,4 | 43 |
| 6 | 33 | 70 | 72 | 7 900 | 1,4 | 77 |
| 11 | 29 | 70 | 96 | 7 200 | 1,4 | 45 |

| n | Propriétés Mésomorphes |
|---|---|
| 2 | G 75 N 220 L |
| 6 | G 37 $N_{re}$ 110 $S_A$ 170 N 190 L |
| 11 | G 42 S 210 L |

## Revendications

1. Polymère mésomorphe à chaînes latérales, caractérisé en ce qu'il répond à la formule chimique générale suivante :

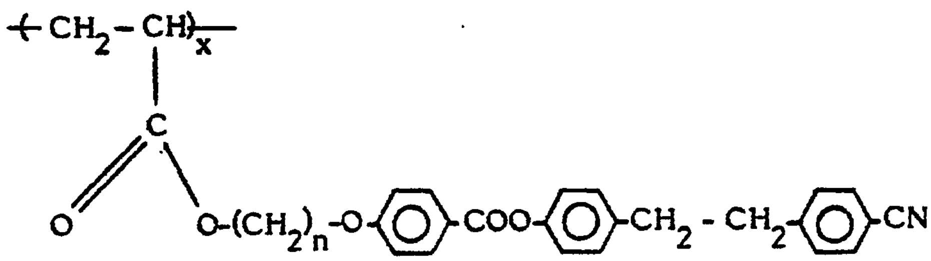

x indiquant le degré de polymérisation et 2 ≤αμρ¨n≤αμρ¨ 15.

2. Procédé de fabrication d'un polymère mésomorphe selon la revendication 1, caractérisé en ce qu'il comporte, dans le cas où 2 ≤αμρ¨ n ≤αμρ¨ 15 à l'exception de n = 4, les étapes suivantes :

1ère étape : obtention du chlorure de 4-bromophénylacétyle par action du chlorure de thionyle sur l'acide 4-bromophénylacétique,

- 2ème étape : obtention du 4-(4-bromophénylacétyl)-4'-méthoxyphényle par action du chlorure obtenu à l'issue de la première étape sur le méthoxybenzène,
- 3ème étape : obtention du 1-(4-bromophényl) 2-(4'-hydroxyphényl) éthane par réduction du produit obtenu à l'issue de la seconde étape par action de l'hydrazine en milieu basique et en présence de diéthylène glycol,
4ème étape : obtention du 1-(4-cyanophényl)-2-(4'-hydroxyphényl) éthane par cyanuration du produit obtenu à l'issue de la troisième étape,
5ème étape : obtention de 1' ω-bromoalcanol par réduction de l'acide ω-bromoalcanoïque correspondant au moyen de l'hydrure de lithium et d'aluminium dans l'éther,
6ème étape : synthèse de l'acide 4-(ω-hydroxyalkyloxy) benzoïque par action de 1' ω-bromoalcanol sur l'acide 4-hydroxy benzoïque en milieu potasse hydroalcoolique,
7ème étape : obtention de l'acide 4-(acryloyloxyalkyloxy) benzoïque par estérification de l'acide obtenu à l'issue de la sixième étape au moyen de l'acide acrylique,
8ème étape : synthèse du chlorure de 4-(acryloyloxyalkyloxy) benzoyle par action du chlorure d'oxalyle sur l'acide obtenu à l'issue de la septième étape avec le diméthylformamide comme catalyseur,
9ème étape : obtention du 1-(4-acryloyloxyalkyloxybenzoyloxyphényl)-2-(4'-cyanophényl) éthane par action du chlorure obtenu à l'issue de la huitième étape sur le produit obtenu à l'issue de la quatrième étape,
10ème étape : polymérisation du monomère obtenu à l'issue de la neuvième étape.

3. Procédé de fabrication d'un polymère mésomorphe selon la revendication 1, caractérisé en ce qu'il comporte, dans le cas où n = 4, les étapes suivantes :
- 1ère étape : obtention du chlorure de 4-bromophénylacétyle par action du chlorure de thionyle sur l'acide 4-bromophénylacétique,
2ème étape : obtention du 4-(4-bromophénylacétyl)-4'-méthoxyphényle par action du chlorure obtenu à l'issue de la première étape sur le méthoxybenzène,
3ème étape : obtention du 1- (4-bromophényl)-2-(4'-hydroxyphényl) éthane par réduction du produit obtenu à l'issue de la seconde étape par action de l'hydrazine en milieu basique et en présence de diéthylène glycol,
4ème étape : obtention du 1-(4-cyanophényl-2-(4'-hydroxyphényl) éthane par cyanuration du produit obtenu à l'issue de la troisième étape,
5ème étape : protection de la fonction acide 4-hydroxybenzoïque par action du méthanol,
6ème étape : éthérification du produit obtenu à l'issue de la cinquième étape par action du 1,4-dibromobutane,
7ème étape : déprotection de la fonction acide du produit obtenu à l'issue de la sixième étape par réaction en milieu potasse alcoolique puis en milieu acide,
8ème étape : estérification du produit obtenu à l'issue de la septième étape par l'acrylate de lithium dans l'hexaméthylphosphoramide,
9ème étape : synthèse du chlorure de 4-(acryloyloxybutyloxy) benzoyle par action du chlorure d'oxalyle sur le produit obtenu à l'issue de la huitième étape et avec le diméthylformamide comme catalyseur,
10ème étape : obtention du 1-(4-acryloyloxybutyloxybenzoyloxyphényl)-2-(4'-cyanophényl) éthane par action du chlorure obtenu à l'issue de la neuvième étape sur le produit obtenu à l'issue de la quatrième étape,
11ème étape : polymérire obtenu à l'issue de la dixième étape.

## Patentansprüche

1. Mesomorphes Polymer mit Seitenketten, dadurch gekennzeichnet, daß es der folgenden allgemeinen chemischen Formel entspricht:

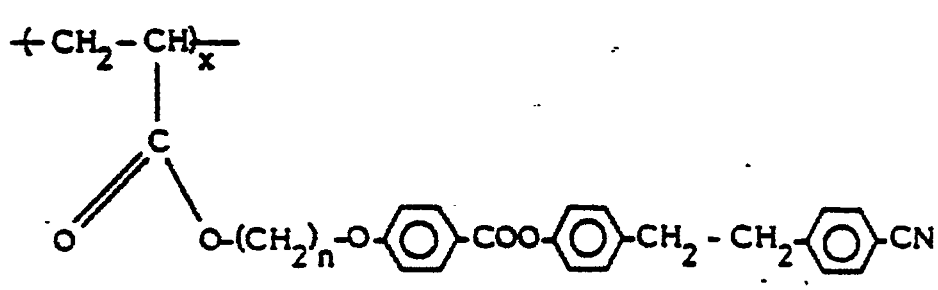

worin X den Polymerisationsgrad angibt und $2 \leq n \leq 15$.

2. Verfahren zur Herstellung eines mesomorphen Polymers nach Anspruch 1, dadurch gekennzeichnet, daß es, für den Fall, daß $2 \leq n \leq 15$, ausgenommen n = 4, die folgenden Stufen umfaßt:
– 1. Stufe: Herstellung von 4-Bromophenylacetylchlorid durch Umsetzung von Thionylchlorid mit 4-Bromophenylessigsäure,

– 2. Stufe: Herstellung von 4-(4-Bromophenylacetyl)-4'-methoxyphenyl durch Umsetzung des in der 1. Stufe erhaltenen Chlorids mit Methoxybenzol,
– 3. Stufe: Herstellung von 1-(4-Bromophenyl)-2-(4'-hydroxyphenyl)ethan durch Reduktion des in der 2. Stufe erhaltenen Produkts mit Hydrazin in basischem Milieu und in Gegenwart von Diethylenglycol,
– 4. Stufe: Herstellung von 1-(4-Cyanophenyl)-2-(4'-hydroxyphenyl)ethan durch Cyanurierung des in der 3. Stufe erhaltenen Produkts,
– 5. Stufe: Herstellung von ω-Bromoalkanol durch Reduktion der entsprechenden ω-Bromoalkansäure mit Lithiumaluminiumhydrid in Äther,
– 6. Stufe: Synthese von 4-(ω-Hydroxyalkoxy)benzoesäure durch Umsetzung von ω-Bromoalkanol mit 4-Hydroxybenzoesäure in wäßrigem-alkoholischem Kaliumhydroxid-Milieu,
– 7. Stufe: Herstellung von 4-(Acryloyloxyalkyloxy)benzoesäure durch Veresterung der in der 6. Stufe erhaltenen Säure mit Acrylsäure,
– 8. Stufe: Synthese von 4-(Acryloyloxyalkyloxy)benzoylchlorid durch Umsetzung von Oxalylchlorid mit der in der 7. Stufe erhaltenen Säure unter Verwendung von Dimethylformamid als Katalysator,
– 9. Stufe: Herstellung von 1-(4-Acryloyloxyalkyloxybenzoyloxyphenyl)-2-(4'-cyanophenyl)ethan durch Umsetzung des in der 8. Stufe erhaltenen Chlorids mit dem in der 4. Stufe erhaltenen Produkt und
– 10. Stufe: Polymerisation des in der 9. Stufe erhaltenen Monomers.

3. Verfahren zur Herstellung eines mesomorphen Polymers nach Anspruch 1, dadurch gekennzeichnet, daß es für den Fall, daß n = 4, die folgenden Stufen umfaßt:
– 1. Stufe: Herstellung von 4-Bromophenylacetylchlorid durch Umsetzung von Thionylchlorid mit 4-Bromophenylessigsäure,
– 2. Stufe: Herstellung von 4-(4-Bromophenylacetyl)-4'-methoxyphenyl durch Umsetzung des in der 1. Stufe erhaltenen Chlorids mit Methoxybenzol,
– 3. Stufe: Herstellung von 1-(4-Bromophenyl)-2-(4'-hydroxyphenyl)ethan durch Reduktion des in der 2. Stufe erhaltenen Produkts mit Hydrazin in basischem Milieu und in Gegenwart von Diethylenglycol,
– 4. Stufe: Herstellung von 1-(4-Cyanophenyl)-2-(4'-hydroxyphenyl)ethan durch Cyanurierung des in der 3. Stufe erhaltenen Produkts,
– 5. Stufe: Schützen der 4-Hydroxybenzoesäure-Funktion durch Umsetzung mit Methanol,
– 6. Stufe: Verätherung des in der 5. Stufe erhaltenen Produkts durch Umsetzung mit 1,4-Dibrombutan,
– 7. Stufe: Entfernung der Schutzgruppe für die Säurefunktion des in der 6. Stufe erhaltenen Produkts durch Umsetzung in alkoholischem Kaliumhydroxid-Milieu und anschließend in saurem Milieu,
– 8. Stufe: Veresterung des in der 7. Stufe erhaltenen Produkts mit Lithiumacrylat in Hexamethylphosphoramid,
– 9. Stufe: Synthese von 4-(Acryloyloxybutyloxy)benzoylchlorid durch Umsetzung von Oxalylchlorid mit dem in der 8. Stufe erhaltenen Produkt unter Verwendung von Dimethylformamid als Katalysator,
– 10. Stufe: Herstellung von 1-(4-Acryloyloxybutyloxybenzoyloxyphenyl)-2-(4'-cyanophenyl)ethan durch Umsetzung des in der 9. Stufe erhaltenen Chlorids mit dem in der 4. Stufe erhaltenen Produkt und
– 11. Stufe : Polymerisation des in der 10. Stufe erhaltenen Monomers.

## Claims

1. A mesomorphous polymer having side chains, characterized in that it corresponds to the following general chemical formula:

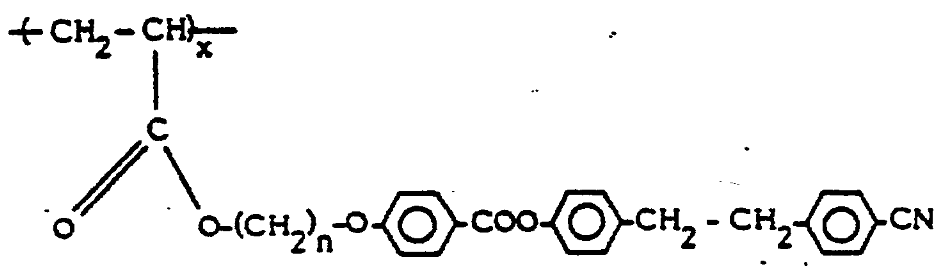

wherein x indicates the degree of polymerization and $2 \leq n \leq 15$.

2. A process for preparing a mesomorphous polymer according to claim 1, characterized in that it comprises the following steps in the case of $2 \leq n \leq 15$ except n = 4:
– step 1: obtaining the 4-bromophenylacetylchloride by reacting thionyl chloride with 4-bromophenylacetic acid,
– step 2: obtaining 4-(4-bromophenylacetyl)-4'-methoxyphenyl by reacting the chloride obtained in step 1 with methoxybenzene,

– step 3: obtaining 1-(4-bromophenyl)-2-(4'-hydroxyphenyl)-ethane by reducing the product obtained in step 2 by means of hydrazine in a basic medium and in the presence of diethylene glycol,
– step 4: obtaining 1-(4-cyanophenyl)-2-(4'-hydroxyphenyl)-ethane by cyanuration of the product obtained in step 3,
– step 5: obtaining ω-bromoalkanol by reducing the corresponding ω-bromoalkanoic acid by means of lithium aluminum hydride in ether,
– step 6: synthesis of 4-(ω-hydroxyalkyloxy)benzoic acid by reacting ω-bromoalkanol with 4-hydroxybenzoic acid in an hydroalcoholic caustic potash medium,
– step 7: obtaining 4-(acryloyloxyalkyloxy)benzoic acid by esterification of the acid obtained in step 6 by means of acrylic acid,
– step 8: synthesis of 4-(acryloyloxyalkyloxy)benzoylchloride by reacting oxalyl chloride with the acid obtained in step 7 using dimethylformamide as catalyst,
– step 9: obtaining 1-(4-acryloyloxyalkyloxybenzoyloxyphenyl)-2-(4'-cyanophenyl)ethane by reacting the chloride obtained in step 8 with the product obtained in step 4, and
– step 10: polymerization of the monomer obtained in step 9.

3. A process for preparing a mesomorphous polymer according to claim 1 characterized in that it comprises the following steps in the case of n = 4:
– step 1: obtaining 4-bromophenylacetylchloride by reacting thionylchloride with 4-bromophenylacetic acid,
– step 2: obtaining 4-(4-bromophenylacetyl)-4'-methoxyphenyl by reacting the chloride obtained in step 1 with methoxybenzene,
– step 3: obtaining 1-(4-bromophenyl)-2-(4'-hydroxyphenyl)ethane by reducing the product obtained in step 2 by means of hydrazine in a basic medium and in the presence of diethylene glycol,
– step 4: obtaining 1-(4-cyanophenyl)-2-(4'-hydroxyphenyl)ethane by cyanuration of the product obtained in step 3,
– step 5: protecting the 4-hydroxybenzoic acid function by reacting with methanol,
– step 6: esterification of the product obtained in step 5 by reacting with 1,4-dibromobutane,
– step 7: deprotecting of the acid function of the product obtained in step 6 by reacting in an alcoholic caustic potash medium and then in an acidic medium,
– step 8: esterification of the product obtained in step 7 by means of lithium acrylate in hexamethylphosphoramide,
– step 9: synthesis of 4-(acryloyloxybutyloxy)benzoylchloride by reacting oxalyl chloride with the product obtained in step 8 and using dimethylformamideas catalyst,
– step 10: obtaining 1-(4-acryloyloxybutyloxybenzoyloxyphenyl)2-(4'-cyanophenyl)ethane by reacting the chloride obtained in step 9 with the product obtained in step 4 and
– step 11: polymerizing the monomer obtained in step 10.